# EUROPÄISCHE PATENTSCHRIFT

(11) **EP 0 564 619 B1**
(45) Veröffentlichungstag und Bekanntmachung des Hinweises auf die Patenterteilung: **28.02.1996**
(21) Anmeldenummer: 92921533.3
(22) Anmeldetag: 20.10.1992
(51) Int. Cl.: A61C 15/04

(54) **DENTAL-SEIDE AUTO-APPLIKATOR**
DENTAL FLOSS SELF-APPLICATOR
AUTO-APPLICATEUR DE FIL DENTAIRE

(30) Priorität: 29.10.1991 CH 3161/91
(43) Veröffentlichungstag der Anmeldung: 13.10.1993
(73) Patentinhaber: NAVRATIL, Zdenek, CH-3033 Wohlen (CH)
(72) Erfinder: NAVRATIL, Zdenek, CH-3033 Wohlen (CH)
(86) Internationale Anmeldenummer: CH9200213
(87) Internationale Veröffentlichungsnummer: WO9308763

(56) Entgegenhaltungen:
- WO-A-91/07143
- GB-A- 1 359 802
- US-A- 3 759 273
- US-A- 3 924 647

## Beschreibung

Die Erfindung bezieht sich auf einen Dental Seide Auto-Applikator; dabei ist die Seide mit Hilfe eines Verschluss-Mechanismus und einer Sicherung der Aufnahme-Spule durch den Sicherungs-Mechanismus in einer Gabel gespannt gehalten.

Der Dental Seiden Applikator ermöglicht in der Dental-Pflege die Reinigung der Zahn-Zwischenräume. Dabei ist die Dental Seide zwischen zwei Zinken einer Gabel gespannt und beide Enden der Seide sind auf dem Applikator befestigt.

Es ist ein Dental Floss Dispenser bekannt ( GB Patent GB-A-1359802 ), bei dem die Dental Seide aus einein Reservoir durch einen Kanal geführt wird, wobei die Dental Seide gegen Nachziehen mittels eines Stiftes der durch die Feder in einer Öffnung in die Spule drückt und damit die Spule festhält. Die Funktionalität dieses Dispenser ist darin zu sehen, dass der Anwender in Praxis die Dental Seide nur auf einen Finger wickeln kann.

Es ist ein Dental Seide Auto-Applikator gemäss den Oberbegriff des Patentanspruchs 1 bekannt ( US Patent 4,790,336 ), bei dem die Seide aus einem Reservoir durch einen Kanal und Schiebe-Verschluss geführt wird, auf einen Vorspann-Zylinder 3-mal gewickelt zu einer der zwei Zinken einer Gabel führt, und durch den Raum zwischen den Zinken zu der zweiten Zinke und anschließend durch eine Rille auf einen Aufnahme-Zylinder angewickelt und so befestigt ist. Die Spannung der Seide zwischen den Zinken wird durch die unterschiedlichen Diameter der zwei Zylinder erzeugt, wobei ein zusätzlicher Schiebe-Verschluss angewendet wird, der die Seide gegen Nachziehen aus dem Reservoir sichert.

Ist dieser Schiebe-Verschluss nicht in Verschluss-Position, kann bei Beanspruchung der gespannten Seide zwischen den Zinken die Seide aus dem Reservoir nachgezogen werden und die Seide die notwendige Reinigungs-Spannung verlieren oder aus den Zinken ausrutschen. Der Schiebe-Verschluss muss immer vor dem Nachziehen manuel aufgemacht und nach den, Nachziehen zugemacht werden. Da der Aufnahme-Zylinder nicht gegen Rückdrehung gesichert ist, kann bei Beanspruchung der gespannten Seide zwischen den Zinken, die Seide aus dem Aufnahmen-Zylinder nachgezogen werden und die Seide die notwendige Reinigungs-Spannung verlieren oder aus den Zinken ausrutschen und das auch, wenn der Schiebe-Verschluss in Verschluss-Position ist.

Hier will die Erfindung Abhilfe schaffen. Die Erfindung, wie sie in den Ansprüchen gekennzeichnet ist, löst die Aufgabe, ein Dental Seide Auto-Applikator zu schaffen, bei dem die Aufnahme-Spule die Funktion hat, in Anwendungs-Position die Seide durch einen Verschluss-Mechanismus gegen Nachziehen aus dem Seiden-Reservoir, und die Aufnahme-Spule gegen Rückdrehung durch ein Sicherungs-Mechnismus zu sichern.

Die durch die Erfindung erreichten Vorteile sind im wesentlichen darin zu sehen, dass Aufmachen des Verschluss-Mechanismus, Nachziehen der Seide und Zumachen des Verschluss-Mechanismus lediglich durch Drehen der Aufnahme-Spule um 180 Grad nach rechts erreicht wird.

**Figur 1** ist Blick von oben auf die Darstellung des Dental Seiden Auto-Applikator in anwendungsbereiter Position.

**Figur 2** ist Seitenansicht mit Schnitt der entlang der Linie 2-2 der Darstellung in Figur 1 führt.

**Figur 3** ist vergrösserter Massstab des Sicherungs-Mechanismus, der in Figur 2 dargestellt ist, es zeigt das Verschluss-Segment auf der oberen Kante des Sicherungs-Zahns.

**Figur 4** ist ein Schnitt durch den Verschluss-Mechanismus, der entlang der Linie 4-4 der Darstellung in Figur 1 führt.

**Figur 5a** ist vergrösserter Massstab des Verschluss-Mechanismus, der in Figur 4 dargestellt ist, es zeigt die Verschluss-Falle in offener Position.

**Figur 5b** ist vergrösserter Massstab des Verschluss-Mechanismus, der in Figur 4 dargestellt ist, es zeigt die Verschluss-Falle, durch Einwirken des Verschluss-Segments, in geschlossener Position.

**Figur 5c** ist vergrösserter Massstab des Verschluss-Mechanismus, der in Figur 4 dargestellt ist, es zeigt die Verschluss-Falle in offener Position.

**Figur 6** ist ein Schnitt durch den Sicherungs-Mechanismus, der entlang der Linie 6-6 der Darstellung in Figur 1 führt, in anwendungsbereiter Position.

**Figur 7a, 7b und 7c** ist vergrösserter Massstab des Sicherungs-Mechanismus, der in Figur 6 dargestellt ist, es zeigt den Sicherungs-Mechanismus in drei verschiedenen Positionen.

**Figur 8** ist ein Schnitt durch den Griff, der entlang der Linie 8-8 der Darstellung in Figur 1 führt.

**Figur 9** ist Seitenschnitt der entlang der Linie 2-2 der Darstellung in Figur 1 führt, es zeigt die Aufnahme-Spule um 90 Grad gedreht.

**Figur 10** ist Blick von oben, der entlang der Linie 10-10 der Darstellung in Figur 9 führt.

**Figur 11** ist vergrösserter Massstab des Verschluss-Mechanismus, der in Figur 9 dargestellt ist, es zeigt die Verschluss-Falle in offener Position.

**Figur 12** ist vergrösserter Massstab des Verschluss-Mechanismus, der in Figur 9 dargestellt ist. Es zeigt die Verschluss-Falle, durch Einwirken des Verschluss-Segments, in geschlossener Position.

In den Figuren ist ein Dental Seide Auto-Applikator 10 dargestellt, welcher in seinem grundsätzlichen Aufbau aus einer Gabel 13 mit zwei Zinken 14, 16 die an ihren Enden 24, 26 jeweils eine Quer-Nut 32, 34 haben. Die Gabel 13 ist verbunden mit einem 4-kantigen Griff 36, der auf der oberen Seite 12 zwei Nuten 20, 22 hat, die an den Seiten der Zinken 14, 16 beginnen 28, 30 und entlang der Griffachse in Richtung Seiden-Reservoir 38 tiefer werden.
Das Seiden-Reservoir 38 ist eine angeformte Verlängerung des Griffs mit einer runden Öffnung 52 mit einer Abdichtungs-Rille 59 und einer freidrehbaren Seiden-Spule 48 darin. Inmitten des Seiden-Reservoirs 38 ist eine Befestigungswalze 40 mit einer Bohrung 44.
Am Ende des angeformten Griffs 36 ist eine verbogene Nut 69 mit Sicherungs-Zahn 64 und Anschlags-Zahn 66 darin.
Mittels einer Schraube 41 ist eine Aufnahme-Spule 42 oberhalb des Reservoir 52 nach rechts drehbar auf der Befestigungswalze 40 befestigt. Die Aufnahme-Spule 42 hat eine Walze 43 die zwischen zwei elliptischen Teller 49, 51 eingebunden ist, und auf der oberen Seite ein Dreh-Griff 56 hat. Auf der unteren Seite der Aufnahme-Spule 45 ist ein Abdichtungs-Ring 53 angebracht.

Erfindungsgemäss sind auf der unteren Seite der Aufnahme-Spule 42 zwei Segmente 60, 62 angebracht. Abwechslungsweise, bedingt durch Drehung der Aufnahme-Spule 42, bilden Segmente 60, 62 mit einer Quer-Nut 57, die in einem Nut-Grund 46 eingebettet ist und einer Verschluss-Falle 45, die auf der unteren Seite eine Feder 58 angebracht hat und durch ein elastisches Band 47 in einer Vertiefung 50 zwischen Griff 36 und Seiden-Reservoir 38 mittels Klebstoff auf dem Grund-Nut befestigt ist, einen Verschluss-Mechanismus 37.

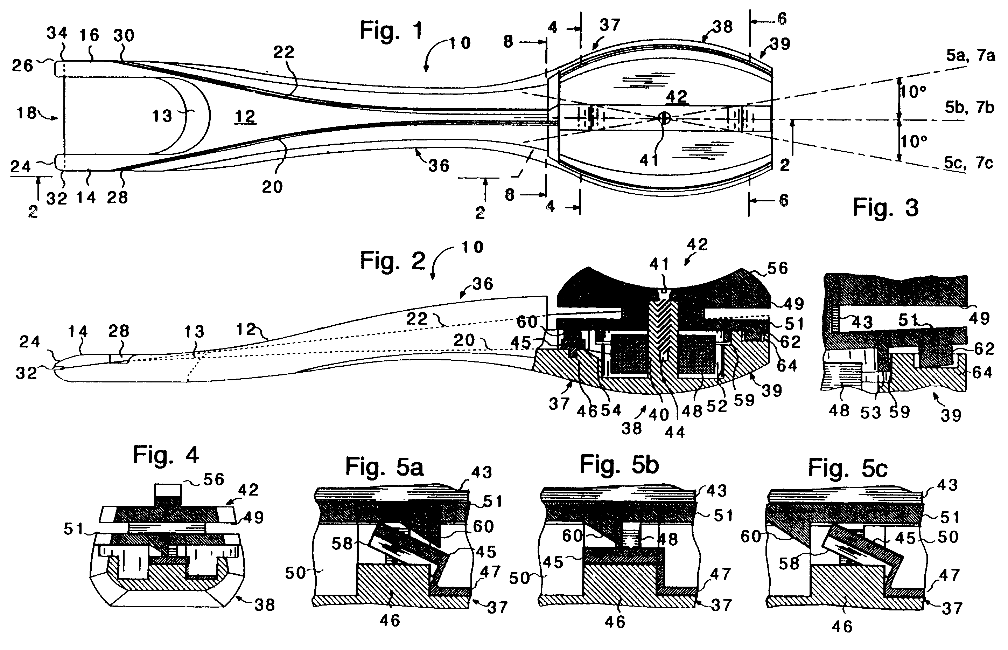

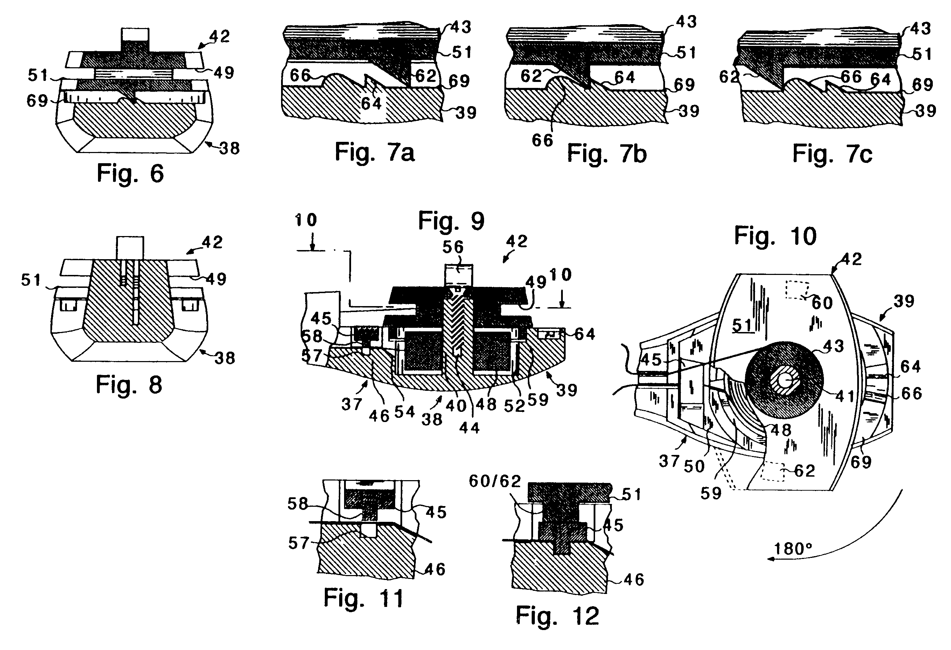

Dabei ist gemäss einer bevorzugten Ausführungsart der Erfindung, die Seide aus dem Seiden-Reservoir 38 durch einen Kanal 54, zwischen der Quer-Nut 57 und der Verschluss-Falle 45 in die Nut 20 im Griff 36, in die Quer-Nut 32 am Ende 24 des linken Zinkens 14 durch den Raum zwischen den Zinken in die Quer-Nut 34 des anderen Zinkens 16 durch die zweite Nut 22 im Griff 36 geführt, und auf der Walze 43 der Aufnahme-Spule 42 angewickelt.
In Anwendungsposition Fig. 1 wird durch Druck des Segments 60 Fig.5b auf die Verschluss-Falle 45 die Feder 58 in die Nut 57 gedrückt und so die darin durchlaufende Seide festgehalten. Die auf der Aufnahme-Spule 42 angewickelte Seide ist gespannt und gegen Nachlasen der Spannung durch Rückdrehen mittels des zweiten Segments 62, das zwischen dem Sicherungs-Zahn 64 und Anschlags-Zahn 66 positioniert ist, gesichert.
Um die verbrauchte Seide zwischen den Zinken 18 zu ersetzen, muss die Aufnahme-Spule 42 um 180 Grad nach rechts Fig. 10 gedreht werden. Durch Drehung der Aufnahme-Spule 42 entlastet das Segment 60 die Verschluss-Falle 45, die schwenkt nach oben, der Verschluss ist offen und die Seide wird nachgezogen. Nach einer Umdrehung der Aufnahme-Spule 42 um 180 Grad erreicht die Aufnahme-Spule 42 die Anwendungs-Position Fig. 1. Das Segment 62 drückt auf die Verschluss-Falle 45, die die Feder 58 in die Nut 57 drückt und so die Seide festhält. Gleichzeitig überrollt das Segment 60, der Sicherungs-Zahn 64 Fig.3, bleibt in der Position zwischen den Zähnen 64, 66 und sichert die Aufnahme-Spule 42 gegen Rückdrehung. Der Anschlags-Zahn 66 hält die Aufnahme-Spule 42 in Anwendungs-Position. Die Seide ist gespannt und der Auto-Applikator 10 zur Wiederanwendung bereit.

## Patentansprüche

1. Dental Seide Auto-Applikator, bestehend aus einer
**Gabel** (13) mit zwei Zinken (14, 16) die auf ihren Enden (24, 26) jeweils eine Quer-Nut (32, 34) haben; einem
**Griff** (36), der mit der Gabel (13) fest verbunden ist, auf der oberen Seite (12) zwei Nuten (20, 22) hat, die an den Seiten der Zinken (14, 16) beginnen (28, 30); einem
**Seiden-Reservoir** (38) mit einer runden Öffnung (52) und einer Abdichtungs-Rille (59); einer
**Sicherung** (39), die eine gebogene Nut (69) mit Sicherungs-Zahn (64) und Anschlag-Zahn (66) darin hat;
**Seide**, die aus der Seiden-Reserve-Spule(48), die im Seiden-Reservoir (38) frei drehbar verschlossen ist, durch einen Kanal (54) in die linke Nut (20) im Griff (36), in die Quer-Nut (32) der linken Zinke (14) durch den Raum zwischen den Zinken (14, 16) der Gabel (13) in die Quer-Nut (34) der rechten Zinke (16) durch die rechte Nut (22) im Griff (36 ) führt, und auf der Walze (43 ) der Aufnahme-Spule (42) aufgewickelt ist,
**dadurch gekennzeichnet**, dass die zwei Nuten (20, 22) auf dem Griff entlang der Griff-Achse in Richtung Seiden-Reservoir (38) tiefer werden,
dass der Verschluss (37), eine Quer-Nut (57), die in einem Nut-Grund (46) eingebettet ist und eine Verschluss-Falle (45) aufweist, die auf der unteren Seite eine Feder (58) aufweist, die genau in die Quer-Nut (57) passt, daß die Verschluß-Falle (45) ein quer zur Längsrichtung der Achse des Griffs (36) angeordnetes elastisches Band (47) aufweist, welches in einer Vertiefung (50) zwischen Griff (36) und Seiden-Reservoir (38) mittels Klebstoff auf dem Nut-Grund (46) befestigt ist, und das Auf- und Ab-Schwenken der Verschluss-Falle (45) ermöglicht,
dass die gebogene Nut (69) mit Sicherungs-Zahn (64) und Anschlag-Zahn (66) darin, quer zur Längsrichtung der Achse des Griffs (36) auf der verlängerten Achse des Griffs auf der anderen Seite des Seiden-Reservoirs angeordnet ist,
und dass die Aufnahme-Spule (42) eine Walze (43) hat, die zwischen zwei elliptischen Tellern (49, 51) eingebunden ist und auf der oberen Seite einen Dreh-Griff (56) hat, der mittels einer Schraube (41) oberhalb des Seiden-Reservoirs (38) auf der Befestigungswalze (40), die eine Bohrung (44) hat, befestigt ist, und daß die Aufnahme-Spule (42) auf der unteren Seite einen Abdichtungs-Ring (53) und zwei Segmente (60, 62) angebracht hat, wobei ein Segment oberhalb des Verschlusses und das andere oberhalb der Sicherung positioniert ist.

2. Auto-Applikator nach Patentanspruch 1, bei dem die Aufnahme-Spule (42) um die eigene Achse nach rechts drehbar ist.

3. Auto-Applikator nach Patentanspruch 2, bei dem durch Druck eines Segments (60) auf die Verschluss-Falle (45) die Feder (58) in die Quer-Nut (57) gedrückt wird und so die zwischen der Quer-Nut (57) und der Verschluss-Falle (45) durchlaufende Seide gegen Nachziehen festhält.

4. Auto-Applikator nach Patentanspruch 2, bei dem die Aufnahme-Spule (42), auf der die Seide angewickelt ist, gegen Nachlassen der Spannung durch Rückdrehen mittels des zweiten Segments (62), das zwischen dem Sicherungs-Zahn (64) und Anschlags-Zahn (66) positioniert ist, gesichert ist.

5. Auto-Applikator nach Patentanspruch 2, bei dem durch Drehung der Aufnahme-Spule (42) nach rechts, entlastet ein Segment (60) die Verschluss-Falle (45), die nach oben schwenkt, der Verschluss ist offen und die Seide ist frei zum Nachziehen.

6. Auto-Applikator nach Patentanspruch 5, bei dem durch Umdrehung der Aufnahme-Spule (42) um 180 Grad die Seide auf die Aufnahme-Spule angewickelt und dadurch nachgezogen wird, und durch Druck des zweiten Segments (62) auf die Verschluss-Falle (45), die die Feder (58) in die Nut (57) drückt und so die Seide gegen Nachziehen festhält.

7. Auto-Applikator nach Patentanspruch 6, bei dem die Aufnahme-Spule (42), nach Umdrehen um 180 Grad, gegen Nachlassen der Spannung durch Rückdrehen mittels des ersten Segments (60) das zwischen dem Sicherungs-Zahn (64) und Anschlags-Zahn (66) positioniert ist, gesichert ist.

8. Auto-Applikator nach Patentanspruch 7, bei dem die Aufnahme-Spule (42) gegen Überdrehen durch den Anschlags-Zahn (66) gesichert ist.

## Claims

1. A dental floss self-applicator which comprises
a **fork** (13) with a pair of prongs (14, 16) on which ends (24, 26) are cross grooves (32, 34);
a **handle** (36) connected with the fork (13), which on the top side (12) has two grooves (20, 22), beginning on the sides (28, 30) of the prongs (14, 16) ;
a **floss reservoir** (38), with rounded opening (52), and a sealing groove (59);
a **securing device** (39), a rounded groove (69) with locking tooth (64) and stop tooth (66);
a **floss**, coming out of the floss spool (48) rotating freely and enclosed in the floss reservoir (38) is threaded, through a groove (54), in the left groove (20), in the handle (36), in the cross groove (32) of the left prong (14), through the space between the prongs (14, 16) of the fork (13) in the cross groove (34) of the right prong (16), through the right groove (22) of the handle (36) and is wound on the cylinder (43) of the reeling spool (42),
characterized by,
that the two grooves (20, 22) on the handle, along the handle axis towards the floss reservoir (38) are increasing in depth,
that the lock (37), a cross groove (57) embedded in a groove base (46) and a lock device (45) with a trap (58) on its bottom side, that fits exactly into cross groove (57)
that the lock device (45) has an elastic band (47) which is glued in the cavity (50) between handle (36) and floss reservoir (38) and enables the up and down movements of the lock device (45), is cross-wise to the longer axis of the handle (36),
that a rounded groove (69), with locking tooth (64) and stop tooth (66) within, cross-wise to the longer axis of the handle (36) on the extended axis of the handle placed on the opposite side of the floss reservoir, and
that the reeling spool (42) has a cylinder (43) which is based between two elliptical dishes (49, 51) attached through a screw (41) above the floss reservoir (38) on the spindle (40), with a drill (44) and
that the reeling spool (42) has on the bottom side a sealing ring(53), two segments (60, 62), whereby is positioned one of them above the lock and the other above the securing device.

2. Self-applicator according to Claim 1, characterized in that, the reeling spool (42) is rotatable clockwise on its own axis.

3. Self-applicator according to Claim 2, characterized in that, through pressure of segment (60) on the lock device (45), the trap (58) is pressed in the cross groove (57) so that the floss guided between the cross groove (57) and the lock device (45) is held taut against reeling.

4. Self-applicator according to Claim 2, characterized in that, the reeling spool (42) on which the floss is wound against loss of tension through the reverse rotation is secured with the help of the segment (62) positioned between the locking tooth (64) and stop tooth (66).

5. Self-applicator according to Claim 2, characterized in that, through the rotation of the reeling spool (42) to the right, relieves the segment (60), the lock device (45) which moves upwards, the lock is open and the floss is free to pull out.

6. Self-applicator according to Claim 5, characterized in that, through the rotation of the reeling spool by 180°, the floss is wound on the reeling spool (42) and pulled through that, and through pressure of the second segment (62) press the lock device (45) the trap (58) in the cross groove (57), tightening the floss against reeling.

7. Self-applicator according to Claim 6, characterized in that, the reeling spool (42) after the rotation of 180°, against loss of tension through the reverse rotation is secured with the help of the segment (60) positioned between the locking tooth (64) and stop tooth (66).

8. Self-applicator according to Claim 7, characterized in that, the reeling spool (42) is secured against overturning through the stop tooth (66).

## Revendications

1. L'auto-applicateur de fil dentaire se compose
**d'une fourchette** (13) munie de deux dents (14, 16) qui ont chacune à leur extrémité (24, 26) une rainure transversale (32, 34);
**d'un manche** (36) relié à la fourchette 13 et présentant sur la partie supérieure (12) deux rainures (20, 22) qui prennent naissance (28, 30) sur le côté des dents (14, 16);
**d'un réservoir à fil** (38) muni d'une ouverture ronde (52) et d'un joint circulaire (40);
**d'une sécurité** empêchant le débobinage (39) faite d'une rainure courbée (69) avec un cran d'arrêt (64) et une butée (66);
**d'un fil** qui à partir de la bobine (48) placée dans le réservoir (38) se déroule par une rainure (54) qui débouche sur la partie supérieure gauche (20) du manche (36), passe dans la rainure sur le côté (32) de la dent gauche (14), puis entre les dents (14, 16) de la fourchette (13) vers la rainure sur le côté (34) de la dent droite (16), par la rainure droite (22) sur le manche (36) pour finalement s'enrouler sur le cylindre (43) de la bobine d'enroulement (42).
**Il se caractérise** par un creusement des deux rainures (20, 22) situées sur le manche en direction du réservoir à fil (38),
par un mécanisme de blocage (37) composé d'une rainure transversale (57) fixée sur le fond (46) et d'un volet (45) muni d'une barrette (58) sur sa partie inférieure qui s'encastre parfaitement dans la rainure (57), par un volet (45) muni d'un pan flexible (47) perpendiculaire au manche (36), fixé dans une cavité (50) entre le manche (36) et le réservoir à fil (38) sur le fond de la rainure (46) au moyen de colle et qui permet le balancement du volet (45),
par une rainure courbée (69) munie d'un cran d'arrêt (64) et d'une butée (66), perpendiculaire à l'axe du manche (36), et située à l'extrémité de ce dernier, de l'autre côté du réservoir à fil,
par une bobine d'enroulement (42) composée d'un cylindre (43) fixé entre deux assiettes elliptiques (49, 51) et d'une poignée (56) sur le dessus fixée au moyen d'une vis (41) au-dessus du réservoir à fil (38) par une percée (44) dans le cylindre (40);
par une bobine d'enroulement (42) présentant sur la partie inférieure un joint circulaire (53) et deux dents (60, 62) positionnées l'une au-dessus du mécanisme de blocage, l'autre au-dessus de la sécurité contre le débobinage.

2. Auto-applicateur de fil dentaire selon exigences formulées sous point 1, sur lequel la bobine d'enroulement (42) tourne à droite sur son propre axe.

3. Auto-applicateur de fil dentaire selon exigences formulées sous point 2, sur lequel la pression exercée par la dent (60) sur le volet (45) entraîne l'encastrement de la barrette (58) dans la rainure transversale (57), bloquant ainsi le déroulement du fil qui passe entre la ramure transversale (57) et le volet (45).

4. Auto-applicateur de fil dentaire selon exigences formulées sous point 2, sur lequel la bobine d'enroulement (42) est protégée contre une détente du fil par déboninage au moyen d'une deuxième dent (62) positionnée entre le cran d'arrêt (64) et la butée (66).

5. Auto-applicateur de fil dentaire selon exigences formulées sous point 2, sur lequel la rotation à droite de la bobine d'enroulement (42) libère la dent (60) appuyant sur le volet (45), lequel remonte et permet ainsi le déroulement du fil.

6. Auto-applicateur de fil dentaire selon exigences formulées sous point 5, sur lequel la rotation de 180 degrés de la bobine d'enroulement (42) entraîne le déroulement du fil et sa nouvelle mise sous tension par pression de la dent (62) sur le volet (45) qui entraîne l'encastrement de la barrette (58) dans la rainure (57) et bloque ainsi le déroulement du fil.

7. Auto-applicateur de fil dentaire selon exigences formulées sous point 6, sur lequel la bobine d'enroulement (42), après une rotation de 180 degrés, est protégée contre une détente du fil par débobinage par la dent (60) positionnée entre le cran d'arrêt (64) et la butée (66).

8. Auto-applicateur de fil dentaire selon exigences formulées sous point 7, sur lequel la bobine d'enroulement (42) est assurée contre les rotations vers l'avant par une butée (66).
